Europäisches Patentamt

European Patent Office

Office européen des brevets

(19)

(11) **EP 0 592 322 B1**

(12) **FASCICULE DE BREVET EUROPEEN**

(45) Date de publication et mention
de la délivrance du brevet:
**19.03.1997 Bulletin 1997/12**

(51) Int. Cl.⁶: **B62D 33/02**

(21) Numéro de dépôt: **93402479.5**

(22) Date de dépôt: **08.10.1993**

(54) **Dispositif d'assistance à l'ouverture et à la fermeture d'une ridelle de benne de véhicule**

Hilfsvorrichtung zum Öffnen und Schliessen von einer Lastfahrzeugbordwand

Auxiliary device for opening and closing of a side-board of a lorry

(84) Etats contractants désignés:
**BE CH DE ES FR GB IT LI NL**

(30) Priorité: **09.10.1992 FR 9212008**

(43) Date de publication de la demande:
**13.04.1994 Bulletin 1994/15**

(73) Titulaire: **MARREL**
**F-42160 Andrézieux-Bouthéon (FR)**

(72) Inventeurs:
• **Fanget, Paul**
**F-42100 St. Etienne (FR)**
• **Grail, Joseph**
**F-42100 St. Etienne (FR)**

(74) Mandataire: **Rinuy, Santarelli**
**14, avenue de la Grande Armée**
**75017 Paris (FR)**

(56) Documents cités:
**AT-B- 328 878**      **DE-B- 1 580 434**
**DE-U- 8 800 823**      **FR-A- 1 419 272**
**US-A- 4 348 045**

• **PATENT ABSTRACTS OF JAPAN vol. 2, no. 47 (M-014)29 Mars 1978 & JP-A-53 007 032 (AISHIN SEIKI) 23 Janvier 1978**
• **PATENT ABSTRACTS OF JAPAN vol. 7, no. 159 (M-228)(1304) 13 Juillet 1983 & JP-A-58 067 570 (JIDOUSHIYA SEIKOU) 22 Avril 1983**

## Description

L'invention a trait aux ridelles de bennes de véhicules qui sont articulées par le bas.

On sait que les ridelles sont des portes qui forment une partie de la paroi verticale de la benne quand elles sont fermées et qu'on ouvre pour faciliter le chargement ou le déchargement de la benne. Les ridelles articulées par le bas sont particulièrement appréciées parce qu'une fois ouvertes, elles ne laissent subsister au dessus du fond de la benne aucun obstacle gênant le chargement ou le déchargement.

L'invention vise à permettre à l'utilisateur de maîtriser pleinement le maniement d'une telle ridelle, y compris dans le cas où elle a un poids élevé, par exemple 100 kg, avec des moyens simples et capables de s'intégrer aisément à une benne.

L'invention propose à cet effet un dispositif d'assistance à l'ouverture et à la fermeture d'une ridelle de benne de véhicule articulée par le bas,

- comportant :

. un levier articulé sur le fond de la benne autour d'un premier axe d'articulation,
. une bielle articulée à une première extrémité à la ridelle autour d'un deuxième axe d'articulation, et à une deuxième extrémité audit levier autour d'un troisième axe d'articulation, et
. un moyen télescopique élastique disposé dans un espace libre sous le fond de la benne, articulé à une première extrémité au levier autour d'un quatrième axe d'articulation et à une deuxième extrémité sur la benne autour d'un cinquième axe d'articulation ;

- lesdits premier à cinquième axes d'articulation étant parallèles à l'axe d'articulation de la ridelle sur la benne ; et
- le dimensionnement dudit levier et de ladite bielle, ainsi que le positionnement sur la benne desdits premier et cinquième axes d'articulation étant adaptés, lorsque la ridelle s'ouvre à partir d'une position d'enclenchement jusqu'à une position ouverte, à ce que ledit moyen élastique subisse une variation de longueur entre les quatrième et cinquième axes d'articulation dans le sens du raccourcissement, tandis que croît un effort théorique d'équilibre statique qui, s'il était exercé sur le levier en étant orienté suivant la direction du moyen télescopique élastique (direction passant par lesdits cinquième et quatrième axes d'articulation), équilibrerait le levier en compensant l'effet exercé sur celui-ci par suite du poids de la ridelle.

Lors de l'ouverture de la ridelle à partir de la position d'enclenchement, il s'exerce sur le moyen télescopique élastique, par suite du poids de la ridelle, un effort égal et opposé audit effort d'équilibre, alors que le moyen télescopique élastique, du fait de son raccourcissement, exerce sur le levier une réaction élastique qui s'y oppose. Le caractère élastique de cette réaction signifie qu'elle croît au fur et à mesure que le moyen télescopique élastique se raccourcit, c'est-à-dire au fur et à mesure que la ridelle s'ouvre. La réaction élastique du moyen télescopique élastique et l'effort qu'il subit varient donc dans le même sens, ce qui ralentit, au moins, le mouvement d'ouverture et permet par conséquent d'éviter que le basculement de la ridelle vers le bas ne soit soudain et brutal avec un choc violent en fin de mouvement, ce qui est avantageux sur le plan de la sécurité des utilisateurs et sur celui de la longévité du matériel.

Lors de la fermeture de la ridelle, le relèvement de celle-ci est facilité par le moyen télescopique élastique, qui restitue alors l'énergie qu'il a emmagasinée pendant l'ouverture. On évite ainsi, dans le cas où la ridelle a un poids élevé (tel que 100 kg), que l'utilisateur n'ait à exercer un effort musculaire intense pour fermer la ridelle.

On voit que d'une façon générale, le dispositif d'assistance selon l'invention rend le maniement de la ridelle plus doux et plus sûr, tout en le mettant à la portée de personnes dont les capacités musculaires n'auraient pas permis d'assurer seul le relevage de la ridelle.

On notera que l'obtention de résultats du même genre était déjà visée par un certain nombre de documents antérieurs, qui proposent tous des dispositifs d'assistance ayant une structure différente.

US-A-4.348.045 décrit un dispositif pour ouvrir et fermer une ridelle de benne de camion à l'état non chargée. Dans un premier mode de réalisation, le dispositif comporte un levier articulé par une extrémité à l'extrémité inférieure d'un bras qui s'étend vers le bas à partir du fond de la benne, une bielle articulée par une extrémité sur la ridelle et par l'autre extrémité sur la deuxième extrémité du levier, et un ressort de traction accroché dans une première variante à un doigt du bras s'étendant vers le bas à partir du fond de la benne et accroché à un doigt du levier, et dans une deuxième variante, accroché à un doigt situé sous le plancher de la benne, et à un lien de connexion dont l'autre extrémité est accrochée à un doigt du levier tandis qu'il coopère avec une poulie intermédiaire montée sur le bras. Un deuxième mode de réalisation est similaire au premier, mais avec deux tiges intermédiaires disposées entre le ressort et la bielle. Un troisième mode de réalisation est similaire au deuxième, mais avec le ressort qui est remplacé par un arbre de torsion. Enfin, dans un quatrième mode de réalisation, le ressort est logé dans un cylindre et travaille en compression grâce à une barre supplémentaire qui passe à travers le ressort sur toute sa longueur.

JP-A-53.007.032 paraît décrire un accélérateur pour l'ouverture et la fermeture d'une ridelle de camion qui comporte un levier articulé à une extrémité sur l'extrémité inférieure d'un bras qui s'étend vers le bas à partir du fond de la benne, une bielle articulée à une extrémité sur la ridelle et à l'autre extrémité sur la deuxième extrémité du levier, et un moyen élastique articulé à une extrémité sur le levier, à peu près à mi-distance des articulations respectives de celui-ci sur le bras et sur la bielle, et en un point intermédiaire, sur le bras, au-dessus de l'axe d'articulation entre celui-ci et la bielle, la distance entre les deux axes d'articulation du moyen élastique variant dans le sens de l'allongement lors de l'ouverture de la ridelle, le moyen élastique étant formé par trois éléments emboîtés les uns dans les autres, de sorte que sa longueur globale ne varie pas. Dans l'exemple illustré, le quadrilatère délimité par l'axe d'articulation de la ridelle sur la benne, par l'axe d'articulation de la bielle sur la ridelle, par l'axe d'articulation entre la bielle et le levier et par l'axe d'articulation de la bielle sur le bras, forme un parallélogramme. Il est possible de démontrer que le positionnement des points d'articulation du moyen élastique respectivement sur la bielle et sur le bras, est tel que lors de l'ouverture de la ridelle, il y a croissance de l'effort théorique d'équilibre statique qui, s'il était exercé sur le levier en étant orienté suivant la direction du moyen télescopique élastique (direction passant par ses deux axes d'articulation), équilibrerait le levier en compensant l'effet exercé sur celui-ci par suite du poids de la ridelle.

FR-A-1.419.272 décrit un appareil compensateur de manoeuvre de ridelle qui comporte un levier articulé sur la benne, un moyen télescopique élastique disposé dans un espace libre sous le fond de la benne, articulé à une première extrémité au levier et à une deuxième extrémité sur la benne, l'autre extrémité du levier coopérant par appui avec la ridelle par l'intermédiaire d'un galet engagé dans une rainure pratiquée dans la surface de la ridelle.

On observera que la structure du dispositif selon l'invention est particulièrement simple, et donc économique ; et que son agencement lui permet de s'intégrer aisément à une benne, notamment grâce à la disposition du moyen télescopique élastique dans un espace libre sous le fond de la benne, la structure du système articulé et l'emplacement des points d'articulation permettant au moyen télescopique, lors de l'ouverture ou de la fermeture de la ridelle, d'avoir une direction qui varie avec un débattement limité qui n'excède pas les dimensions de l'espace libre sous la benne.

Selon des caractéristiques préférées, lorsque la ridelle passe de la position d'enclenchement à la position ouverte, ledit moyen télescopique élastique exerce sur ledit levier un effort de réaction toujours inférieur audit effort d'équilibre.

Ainsi, lors de l'ouverture de la ridelle à partir de la position d'enclenchement, le moment auquel est soumis celle-ci par suite de son poids sera toujours supérieur au moment résistant dû au moyen télescopique élastique, de sorte qu'à partir de la position d'enclenchement la totalité du mouvement d'ouverture de la ridelle se déroule spontanément, sans qu'il soit besoin de lui appliquer à un moment ou à un autre un effort pour vaincre un excédent de moment résistant.

Selon d'autres caractéristiques préférées, ledit effort d'équilibre croît vis-à-vis du raccourcissement du moyen télescopique élastique avec un taux de croissance qui est élevé lorsque la ridelle vient de quitter la position d'enclenchement, et qui diminue ensuite jusqu'à rester à peu près constant sur au moins une partie du trajet d'ouverture de la ridelle ; et en ce que ledit moyen télescopique élastique est prétaré.

Le fait que le moyen télescopique élastique soit prétaré, c'est-à-dire qu'a raccourcissement nul il exerce une reaction dont l'intensité a une valeur non nulle (valeur de prétarage), permet que le moyen élastique exerce une réaction proche de l'effort d'équilibre qui a un tel taux de croissance.

La position d'enclenchement du dispositif d'assistance peut correspondre directement à la position fermée de la ridelle, mais de préférence, le dispositif d'assistance comporte un moyen de course libre pour que le dispositif d'assistance n'exerce aucun effort sur la ridelle au cours de son ouverture entre une position fermée et ladite position d'enclenchement où elle a basculé d'un angle prédéterminé a partir de ladite position fermée.

Avec ces caractéristiques, il n'y a aucun moment résistant qui s exerce sur la ridelle entre la position fermée et la position d'enclenchement, ce qui permet de mieux faire correspondre, au début du mouvement d'ouverture, le moment dû au poids de la ridelle et le moment résistant qui s'y exerce.

Si l'on désire par exemple que lors de l'ouverture de la ridelle, le moment résistant soit toujours inférieur au moment dû au poids de la ridelle, on peut mettre en oeuvre les caractéristiques qui viennent d'être exposées en prévoyant que le moyen télescopique élastique ait une raideur correspondant au taux de croissance de l'effort d'équilibre lorsque ce taux reste à peu près constant, l'angle prédéterminé étant choisi pour correspondre au début du moment ou ce taux commence à rester à peu près constant, et la valeur de prétarage choisie pour être à ce moment là inférieure à l'effort d'équilibre.

Dans un mode de réalisation simple, commode et économique, ledit moyen de course libre est adapté à rendre librement mobile l'un desdits deuxième, troisième, quatrième ou cinquième axes pendant que la ridelle s'ouvre entre lesdites positions fermée et d'enclenchement.

La mise en oeuvre de ce moyen de course libre peut être réalisé en prévoyant que :

- ledit moyen de course libre comporte un élément de libre télescopage prévu sur ledit moyen télescopique élastique, sur ladite bielle, ou sur ledit levier entre lesdits troisième et quatrième axes d'articulation ;

- l'un desdits deuxième, troisième, quatrième ou cinquième axes d'articulation est réalisé par un pivot qui articule un premier et un deuxième éléments, qui sont respectivement soit ladite ridelle et ladite bielle, soit ladite bielle et ledit levier, soit ledit levier et ledit moyen télescopique élastique, soit ledit moyen télescopique élastique et ladite benne, ledit pivot étant monté à coulissement sur l'un desdits premier et deuxième éléments ;

- ledit pivot est monté à coulissement sur l'un desdits premier et deuxième éléments en y étant engagé dans au moins un trou oblong ;
- l'un desdits deuxième, troisième, quatrième ou cinquième axes d'articulation est réalisé par un pivot qui articule au-delà de ladite position d'enclenchement, un premier élément par rapport à un deuxième élément qui sont respectivement soit ladite ridelle et ladite bielle, soit ladite bielle et ledit levier, soit ledit levier et ledit moyen télescopique élastique, soit ledit moyen télescopique élastique et ladite benne, ledit pivot étant monté sur le premier élément et sur une première extrémité d'une biellette, articulée à une deuxième extrémité sur ledit deuxième élément, qui comporte un moyen de butée dont se rapproche ladite biellette au cours de l'ouverture de la ridelle entre la position fermée et la position d'enclenchement, où la biellette vient en appui sur le moyen de butée, sur laquelle elle reste en appui dans la suite du mouvement d'ouverture de la ridelle ;
- ledit axe d'articulation qui est réalisé par un pivot est le cinquième axe d'articulation, ledit premier élément est le moyen télescopique élastique et ledit deuxième élément la benne.

Selon des caractéristiques avantageuses, le moyen télescopique élastique comporte un premier et un deuxième éléments télescopiques élastiques, le premier élément télescopique élastique étant prétaré avec une première valeur de tarage et le deuxième élément télescopique élastique avec une deuxième valeur de tarage ; un premier élément de course libre étant prévu pour que le premier élément télescopique élastique n'exerce au cours de l'ouverture de la ridelle aucun effort de réaction sur le levier entre la position fermée de la ridelle et la position d'enclenchement où la ridelle a basculée d'un premier angle prédéterminé à partir de la position fermée, et un deuxième élément de course libre pour que le deuxième élément télescopique élastique n'exerce au cours de l'ouverture de la ridelle aucun effort de réaction sur le levier entre la position fermée de la ridelle et une position où la ridelle a basculée d'un deuxième angle prédéterminé qui est plus grand que ledit premier angle prédéterminé, de sorte qu'entre la position fermée de la ridelle et ladite position d'enclenchement, le premier et le deuxième éléments télescopiques élastiques n'exercent aucun effort de réaction sur le levier, qu'entre ladite position d'enclenchement et ladite position où la ridelle a basculée dudit deuxième angle prédéterminé, le premier élément télescopique élastique exerce sur le levier un effort de réaction alors que le deuxième élément télescopique élastique n'exerce aucun effort de réaction, et qu'au-delà de ladite position où la ridelle a basculé dudit deuxième angle prédéterminé, le premier et le deuxième éléments télescopiques élastiques exercent chacun sur le levier un effort de réaction.

Avec cette mise en action successive des premier et deuxième éléments télescopiques élastiques, il est possible de faire correspondre d'encore plus près, au début du mouvement d'ouverture, l'effort d'équilibre et l'effort de réaction du moyen télescopique élastique.

Dans une forme de réalisation simple, commode et économique, ledit premier et ledit deuxième éléments télescopiques élastiques sont articulés à une première extrémité sur un pivot commun réalisant l'un desdits quatrième ou cinquième axes d'articulation du moyen télescopique élastique, et à une deuxième extrémité sur un premier et sur un deuxième pivots distincts coopérant respectivement avec ledit premier et ledit deuxième éléments de course libre, l'autre desdits quatrième et cinquième axes d'articulation du moyen télescopique élastique étant considéré par convention comme étant l'axe du premier pivot.

On notera que pour un tel moyen télescopique élastique, où il y a deux éléments télescopiques élastiques qui sont articulés à l'une de leurs extrémités autour d'axes distincts, on devrait considérer pour définir la direction du moyen télescopique élastique et son raccourcissement, qu'à l'extrémité où les axes sont distincts, le moyen télescopique s'étend à partir d'un axe théorique d'articulation parallèle auxdits axes distincts et positionné par rapport à ceux-ci de façon équilibrée. Toutefois, les axes distincts étant dans la pratique très proches l'un de l'autre, l'approximation faite ici, qui consiste à considérer comme l'axe théorique l'un desdits axes distincts choisi arbitrairement, est tout à fait satisfaisante.

Selon d'autres caractéristiques préférées du dispositif d'assistance conforme à l'invention, dans la position ouverte de la ridelle, la direction du moyen télescopique élastique rencontre ledit premier axe d'articulation.

La ridelle va ainsi garder la position ouverte lorsqu'elle l'aura atteinte, puisque dans cette position le bras de levier du moyen télescopique élastique vis à vis du premier axe est nul et que par conséquent le levier et donc la ridelle ne sont alors pas sollicités par le moyen télescopique élastique.

Selon d'autres caractéristiques préférées de réalisation, qui permettent de mettre en oeuvre aisément les caractéristiques préalablement exposées, dans ledit positionnement sur la benne des premier et cinquième axes d'articulation, ledit premier axe d'articulation est situé au niveau de l'axe d'articulation de la ridelle sur la benne et derrière celui-ci, et ledit cinquième axe d'articulation est situé en arrière et en-dessous dudit premier axe d'articulation ; dans la position d'enclenchement, lesdits deuxième et troisième axes d'articulation sont en avant et respectivement au-dessus et en-dessous de l'axe d'articulation de la ridelle sur la benne, et ledit quatrième axe d'articulation en-dessous et en arrière du troisième axe d'articulation, et en-dessous et en avant du cinquième axe d'articulation ; et dans la position ouverte de la ridelle, le deuxième axe d'articulation est en-dessous et en arrière de l'axe d'articulation de la ridelle sur la benne et le troisième axe d'articulation en-dessous et en arrière du deuxième axe d'articulation.

L'exposé de l'invention sera maintenant poursuivi par la description d'exemples de réalisation, donnée ci-après à titre illustratif et non limitatif en référence aux dessins annexés, sur lesquels :

- la figure 1 est une vue en élévation d'un camion dont la benne comporte des ridelles articulées par le bas, pour chacune desquelles est prévu un dispositif d'assistance conforme à l'invention ;
- la figure 2 montre de façon schématique un premier exemple de réalisation d'un tel dispositif, suivant une vue correspondant à une élévation-coupe prise transversalement à la benne avec la ridelle en position fermée ;
- la figure 3 est un graphique illustrant le fonctionnement de ce dispositif d'assistance avec en abcisse le raccourcissement du moyen télescopique élastique, et en ordonnée les efforts correspondants ;
- la figure 4 illustre de façon plus détaillée un deuxième exemple de réalisation du dispositif d'assistance conforme à l'invention, dans la même position que sur la figure 2 ;
- les figures 5 à 7 sont des vues similaires montrant ce dispositif dans des positions qu'il adopte successivement au cours de l'ouverture de la ridelle ;
- la figure 8 montre les biellettes par l'intermédiaire desquelles l'extrémité gauche du moyen télescopique élastique s'articule sur le fond de la benne, ces biellettes étant montrées en agrandissement dans la position des figures 6 et 7 ;
- la figure 9 est également une vue en élévation de ces biellettes, mais en vue de face ;
- la figure 10 est un graphique similaire à la figure 3, mais pour le deuxième exemple de réalisation du dispositif d'assistance ; et
- la figure 11 est une vue similaire à la figure 8, montrant une variante de réalisation des biellettes.

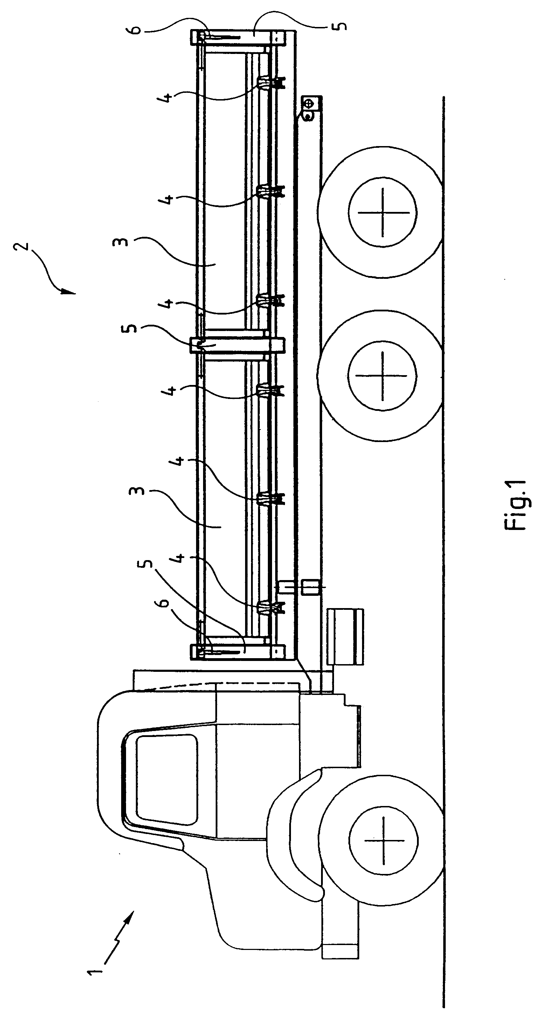

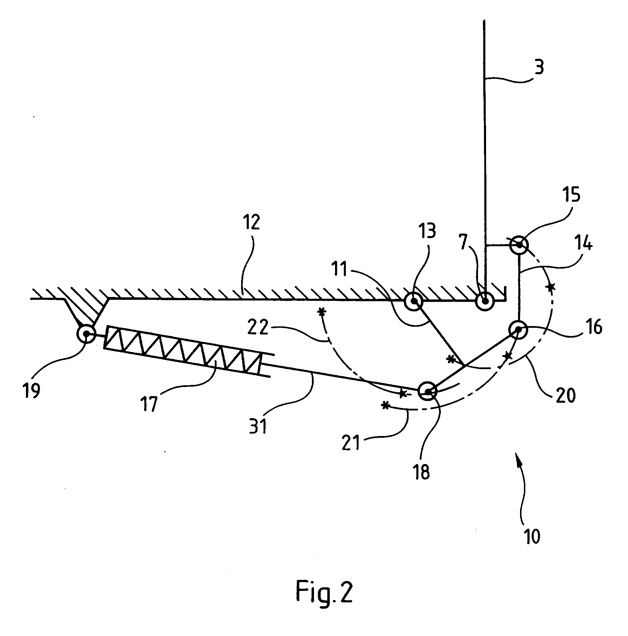

Le camion 1 montré sur la figure 1 comporte une benne 2 munie de chaque côté de deux ridelles 3 articulées par le bas grâce à des charnières 4, chaque ridelle étant disposée entre deux poteaux 5 au sommet desquels elles s'accrochent en position fermée grâce à un dispositif de verrouillage dont l'ouverture est commandée en relevant la poignée 6, la ridelle basculant alors autour de l'axe d'articulation 7 (voir figures 2 et 4 à 7) commun aux charnières 4, en basculant extérieurement vers le bas à partir de la position fermée montrée sur les figures 1, 2 et 4 où la ridelle 3 est disposée verticalement au-dessus de l'axe 7.

Le dispositif d'assistance 10 montré sur la figure 2 comporte un levier 11 articulé sur le fond 12 de la benne 2 autour d'un axe d'articulation 13, une bielle 14 articulée à une première extrémité à la ridelle 3 autour d'un axe d'articulation 15, et à une deuxième extrémité au levier 11 autour d'un axe d'articulation 16, et un élément télescopique élastique 17, ici un ressort à gaz, disposé dans un espace libre sous le fond 12 de la benne 2, articulé à une première extrémité au levier 11 autour d'un axe d'articulation 18, et à une deuxième extrémité sur le fond 12 autour d'un axe d'articulation 19.

Les axes 13, 15, 16, 18 et 19 sont parallèles à l'axe 7. L'axe 13 est situé au niveau de l'axe 7 et derrière celui-ci, et l'axe 19 est situé en arrière et en dessous de l'axe 13. Dans la position fermée de la ridelle 3 montrée sur la figure 2, les axes 15 et 16 sont en avant et respectivement au-dessus et en-dessous de l'axe 7 (la bielle 14 est verticale), et l'axe 18 est en-dessous et en arrière de l'axe 16, et en-dessous et en-avant de l'axe 19, ainsi qu'en-dessous et très légèrement en avant de l'axe 13.

Lorsque la ridelle 3 s'ouvre, le dispositif 10 se déforme, avec l'axe 15 qui suit le trajet 20 en arc de cercle autour de l'axe 7, l'axe 16 qui suit le trajet 21 en arc de cercle autour de l'axe 13, et l'axe 18 qui suit le trajet 22 en arc de cercle autour de l'axe 13. Sur chacun des trajets 20, 21 et 22, on a repéré par une étoile à cinq branches pointues la position qu'occupe l'axe correspondant lorsque la ridelle 3 a basculé de 45° à partir de la position fermée, et par une étoile à six branches droites la position qu'occupe l'axe correspondant lorsque la ridelle 3 est dans sa position ouverte où elle est disposée verticalement en-dessous de l'axe 7, c'est-à-dire où elle a pivoté de 180° par rapport à la position fermée.

On voit qu'au cours de l'ouverture de la ridelle 3, l'élément télescopique élastique 17 se raccourcit progressivement, en ayant une direction qui varie avec un débattement limité (ici, d'environ 17°), lui permettant de pivoter par rapport à l'axe 19 sans sortir de l'espace libre dans lequel il est disposé sous le fond 12. Dans la position ouverte de la ridelle 3, les axes 13, 18 et 19 sont coplanaires, l'axe 15 est en-dessous et en arrière de l'axe 7 et en avant de l'axe 13, et l'axe 16 est en-dessous et en arrière de l'axe 15 et en arrière de l'axe 13.

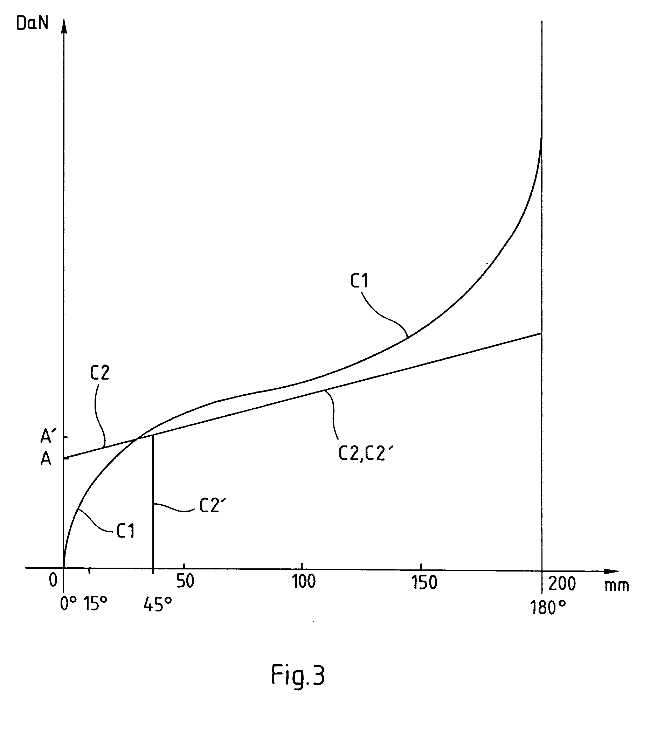

La courbe C1 montrée sur la figure 3 représente la variation de l'effort dit d'équilibre qui, exercé sur le levier 11 en étant orienté suivant la direction de l'élément 17, équilibrerait statiquement le levier 11 en compensant l'effet exercé sur celui-ci par suite du poids de la ridelle 3, en fonction du raccourcissement de l'élément 17, certaines valeurs de l'angle dont a basculé la ridelle 3 à partir de sa position fermée étant également indiquées sur l'échelle des abcisses.

On voit que cet effort d'équilibre croît à partir de zéro au fur et à mesure que la ridelle s'ouvre, et donc que le moyen 17 se raccourcit, cet effort ayant vis-à-vis de ce raccourcissement un taux de croissance qui est élevé lorsque la ridelle vient de quitter la position fermée, qui diminue ensuite jusqu'à rester à peu près constant à partir d'environ 40° sur une partie du trajet d'ouverture de la ridelle, le taux de croissance recommençant ensuite à croître fortement, l'effort d'équilibre tendant vers l'infini dans la position ouverte de la ridelle, où s'annule le bras de levier de l'élément 17 par rapport à l'axe 13.

Sur la figure 3, la courbe C2 représente l'effort de réaction élastique qui s'exerce suivant la direction de l'élément 17, en fonction de son raccourcissement.

L'élément 17 est prétaré de sorte qu'à raccourcissement nul il exerce une réaction élastique A, qui est sa valeur de prétarage. Plus généralement, la réaction élastique procurée par le moyen 17 varie suivant la formule :

$$R = A + Kx$$

où R est l'effort de réaction élastique de l'élément 17, K sa raideur et x son raccourcissement.

On voit que la raideur K a été choisie comme correspondant à la valeur du taux de croissance de la courbe C1 sur la plage où elle est à peu près constante, et que A a été choisi pour qu'à peu près à partir de 40° la courbe C2 soit en-dessous de la courbe C1.

L'élément 17 exerce donc sur le levier 11, par suite de son raccourcissement, un effort qui est supérieur à l'effort d'équilibre jusqu'à environ 40°, et qui est inférieur au-delà.

Par conséquent, pour ouvrir la ridelle, l'utilisateur devra exercer sur celle-ci jusqu'à environ 40° un effort pour la faire basculer vers le bas afin de vaincre l'excédent de moment résistant provenant de la réaction de l'élément 17, et au-delà d'environ 40° la ridelle basculera spontanément sous l'effet de son poids jusqu'en position ouverte où elle se maintiendra, son mouvement de basculement spontané ayant été amorti par l'élément 17. Pour fermer la ridelle 3, l'utilisateur devra fournir un effort sur la ridelle jusqu'à ce que celle-ci ne soit plus qu'à environ 40° de la position fermée, avec une intensité relativement faible par rapport à celle qui aurait été nécessaire sans le dispositif 10, l'élément 17 restituant alors l'énergie qu'il a emmagasinée pendant l'ouverture de la ridelle ; les derniers environ 40° de la course de fermeture de la ridelle 3 s'effectuant spontanément sous l'effet de l'élément 17.

Dans une variante non représentée, l'élément 17 du dispositif 10 est remplacé par un moyen télescopique correspondant à l'élément 17 mais dont la tige, à la différence de la tige 31 de l'élément 17, n'est pas rigide mais comporte un élément de libre télescopage de sorte que le moyen télescopique qui remplace l'élément 17 se raccourcit librement, c'est-à-dire sans exercer d'effort de réaction, jusqu'à ce que le moyen de libre télescopage soit en butée, le moyen télescopique se raccourcissant ensuite en exerçant un effort de réaction élastique similaire à celui qu'exerce l'élément 17.

Sur la figure 3, la courbe C2' représente un exemple de l'effort de réaction qui s'exerce suivant la direction de ce moyen télescopique, en fonction de son racourcissement : il se raccourcit librement entre la position fermée de la ridelle 3 et une position où elle a basculé de 45°, l'élément de libre télescopage vient alors en butée et l'élément télescopique élastique commence à se comprimer. Cet élément télescopique élastique a la même raideur que l'élément 17 et est prétaré avec une valeur de prétarage A' correspondant à la valeur de l'effort de réaction exercé par l'élément 17 lorsque la ridelle est ouverte à 45°, de sorte que dans la suite du mouvement d'ouverture de celle-ci, la courbe C2' correspond à la courbe C2.

On voit que l'élément de libre télescopage et la valeur de tarage ont été choisis pour que le moyen télescopique exerce sur le levier 11 par suite de son raccourcissement, un effort de réaction qui est toujours inférieur à l'effort d'équilibre représenté par la courbe C1.

Par conséquent, la totalité du mouvement d'ouverture de la ridelle se déroule spontanément, l'utilisateur n'a aucun effort à exercer sur celle-ci pour vaincre un excédent de moment résistant provenant de la réaction du moyen télescopique.

Dans d'autres variantes non représentées, on obtient un fonctionnement similaire en remplaçant la bielle 14 par une bielle avec un élément de libre télescopage, ou en remplaçant le levier 11 par un levier comportant un moyen de libre télescopage entre les axes 18 et 16 ; ou encore en prévoyant de rendre librement mobile sur une certaine plage l'un des axes 15, 16, 18 ou 19 par rapport à l'un des éléments qui l'articule, par exemple en prévoyant que le pivot qui sert à réaliser cet axe soit porté par des trous oblongs (ou par un autre moyen de montage à coulissement) sur l'un des éléments, ou encore en prévoyant tout autre moyen de course libre pour qu'au cours de l'ouverture de la ridelle, aucun effort de réaction ne s'exerce sur le levier 11 entre la position fermée de la ridelle et une position où celle-ci a basculée d'un angle prédéterminé à partir de la position fermée.

On notera qu'à l'exception du cas où le moyen de course libre conduit à un libre raccourcissement du moyen télescopique élastique (cas de la première variante décrite ci-dessus), il n'y a pas comme sur la figure 3 correspondance entre la position fermée de la ridelle (basculement = 0°) et le raccourcissement nul du moyen télescopique élastique. Ainsi, pour obtenir le même fonctionnement que celui correspondant aux courbes C1 et C2', le raccourcissement nul du moyen télescopique élastique correspondrait à un basculement de 45° (position d'enclenchement) de la ridelle.

De même, à part l'exception précitée, l'un des axes 15, 16, 18 ou 19 a un positionnement qui varie entre la position fermée de la ridelle et la position d'enclenchement.

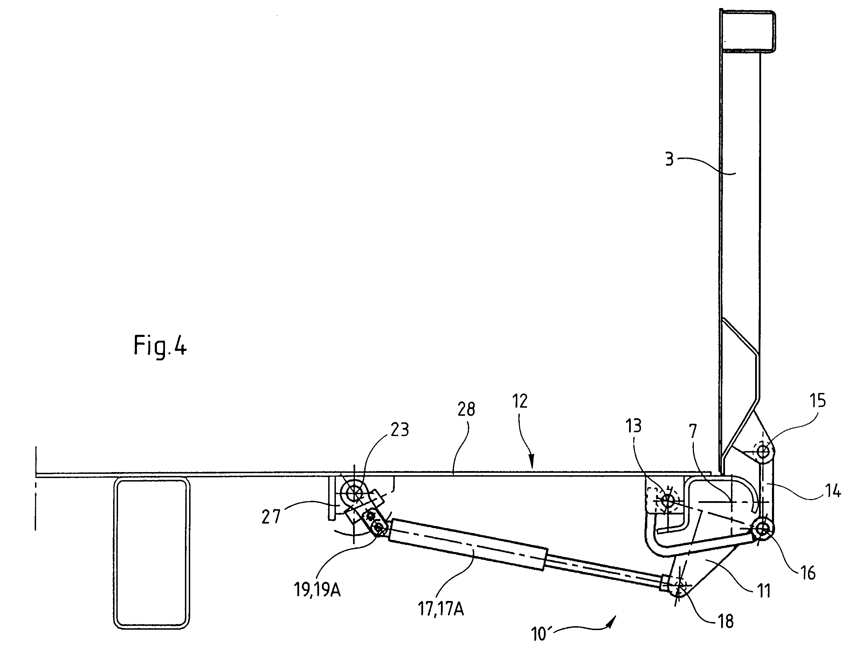

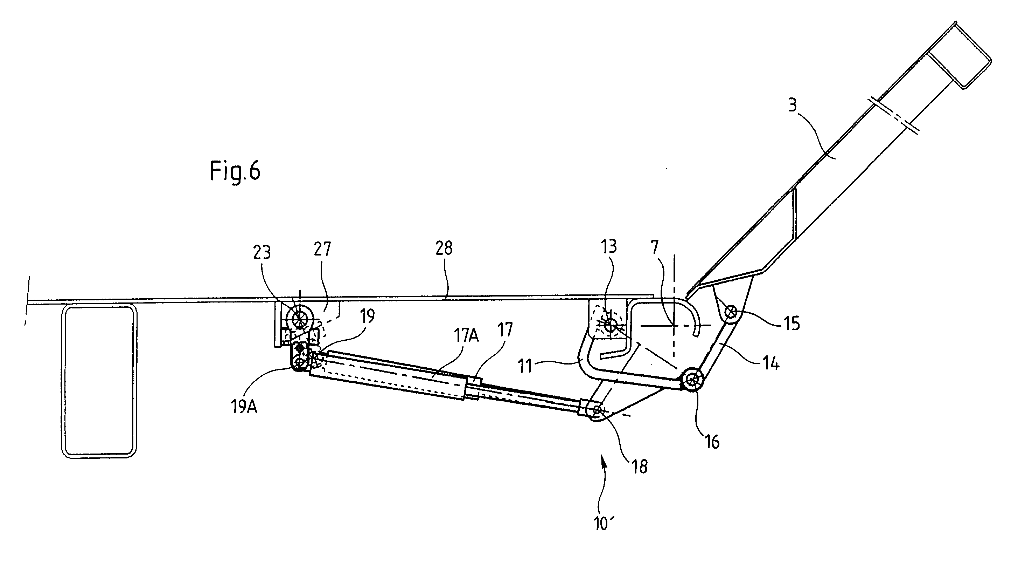

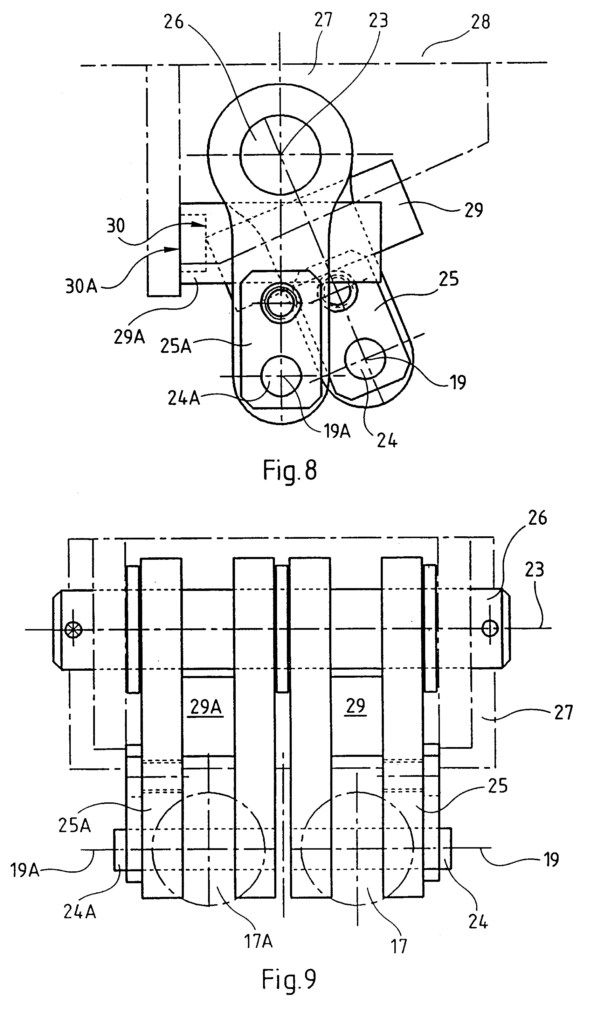

Le dispositif d'assistance 10' montré sur les figures 4 à 7 est similaire au dispositif 10, mais comporte un deuxième élément télescopique élastique 17A (voir plus particulièrement les figures 6 et 9) articulé à l'une de ses extrémités sur le levier 11 coaxialement à l'axe 18, les éléments 17 et 17A étant articulés sur un même pivot porté par le levier 11, l'élément 17A étant articulé à l'autre extrémité autour d'un axe 19A indépendant de l'axe 19, les éléments 17 et 17A étant chacun articulé à cette extrémité sur un pivot distinct, respectivement 24 et 24A (voir figures 8 et 9), les pivots 24 et 24A étant portés respectivement à une extrémité d'une biellette 25 et d'une biellete 25A articulées chacune à son autre extrémité sur le fond 12 de la benne autour d'un axe commun d'articulation 23 fourni par un pivot 26 porté par une console 27 soudée sur une tôle de fond 28 de la benne 2.

Chacune des biellettes 25 et 25A est munie d'un doigt transversal, respectivement 29 et 29A, dont l'extrémité arrière rencontre une surface de butée de la console 27 dans la position montrée sur les figures 6, 7 et 8, respectivement une surface de butée 30 pour le doigt 29 et une surface de butée 30A pour le doigt 29A (voir figure 8).

Lorsqu'ils sont totalement déployés, les éléments 17 et 17A ont la même longueur et par conséquent les axes 19 et 19A sont coaxiaux tant que les éléments 17 et 17A restent totalement déployés.

Dans la position fermée de la ridelle (figure 4), chacun des axes 7, 13, 15, 16 et 18 a un positionnement qui correspond à celui du dispositif 10 montré sur la figure 2, chacun des deux éléments 17 et 17A étant totalement déployé, et chacun des doigts 29 et 29A éloigné respectivement de la butée 30 et de la butée 30A.

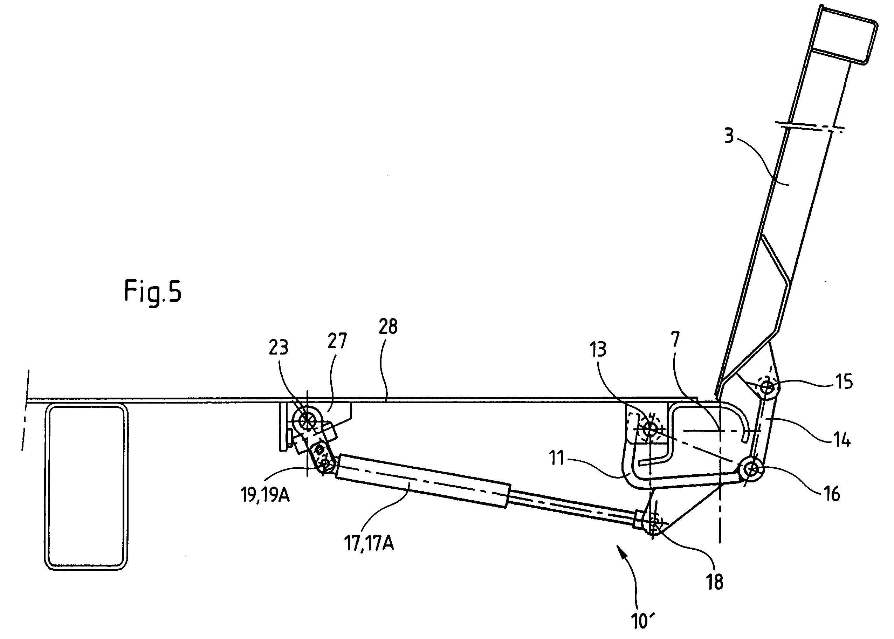

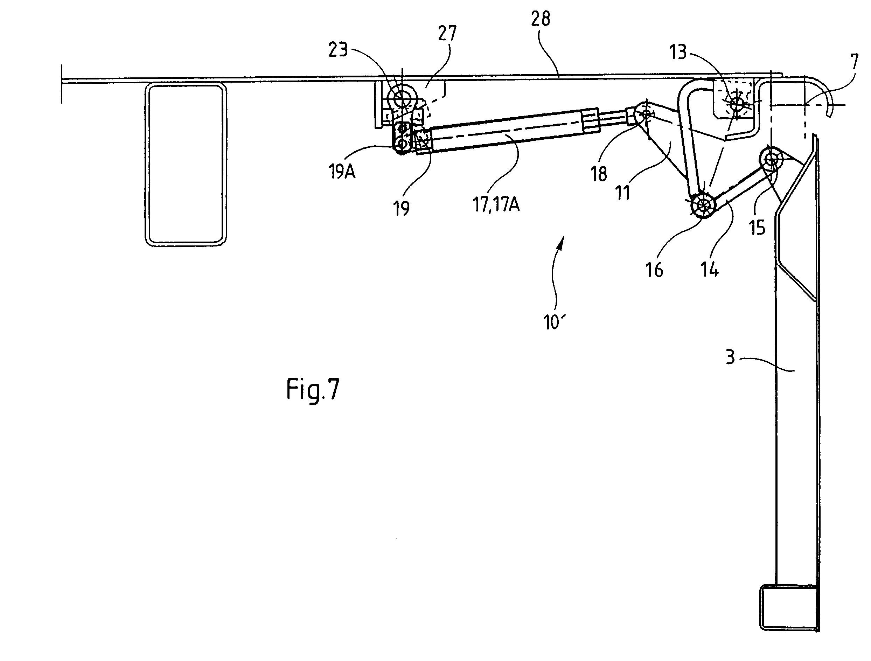

Lorsque la ridelle 3 commence à s'ouvrir, le dispositif 10' se déforme avec les éléments 17 et 17A qui restent totalement déployés tandis que les biellettes 25 et 25A basculent ensemble, et ceci jusqu'à ce que le doigt 29 rencontre la butée 30. Lorsque cela se produit, l'axe 19 a un positionnement qui correspond à celui du dispositif 10 montré sur la figure 2. On est alors dans la position d'enclenchement montrée sur la figure 5, où la ridelle 3 a basculé autour de l'axe 7 d'un angle de 15° par rapport à la position fermée. L'élément télescopique élastique 17 va commencer à se comprimer, c'est-à-dire que les axes 18 et 19 vont commencer à se rapprocher, tandis que l'élément 17A va rester totalement déployé, la biellette 25A continuant à pivoter librement autour de l'axe 23 avec le doigt 29A qui se rapproche de la butée 30A, ce doigt venant en appui sur cette butée dans la position montrée sur la figure 6, où la ridelle 3 a basculé de 45° par rapport à la position fermée. Le mouvement d'ouverture de la ridelle se poursuivra alors avec les deux éléments 17 et 17A qui se compriment en même temps, jusqu'à la position ouverte montrée sur la figure 7, où la ridelle 3 a basculé de 180°, les axes 7, 13, 15, 16, 18 et 19 ayant le même positionnement que dans le dispositif 10 lorsque la ridelle est en position ouverte.

On notera que la description donnée précédemment pour le positionnement relatif des axes 7, 13, 15, 16, 18 et 19 du dispositif 10 dans la position fermée de la ridelle, s'applique au dispositif 10' dans la position d'enclenchement (figure 5).

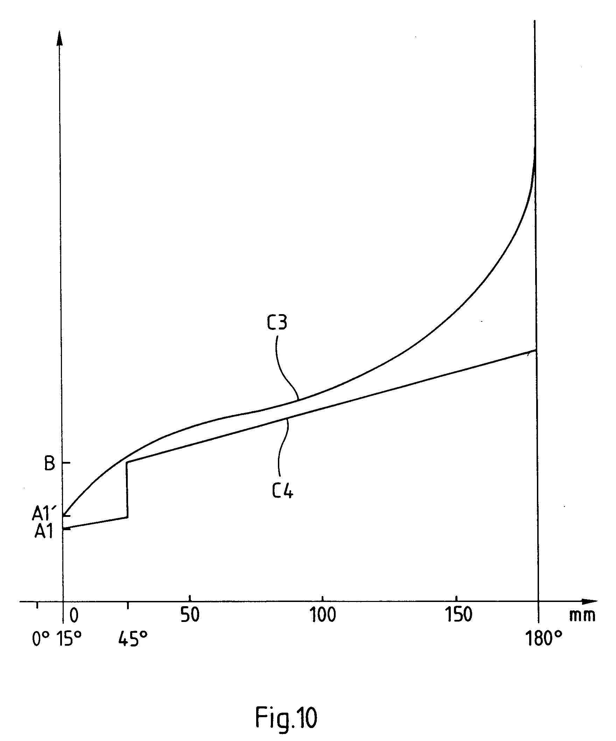

Sur la figure 10, les courbes C3 et C4 sont respectivement similaires aux courbes C1 et C2 ou C2' de la figure 3, la direction du moyen télescopique élastique 17, 17A étant considéré comme passant par les axes 19 et 18, et la longueur de ce moyen télescopique élastique comme étant la distance qui sépare ces mêmes axes 19 et 18.

On voit que la courbe C3 est semblable a la courbe C1, mais sans la partie de cette dernière qui correspond à l'ouverture de la ridelle entre 0 et 15°, compte tenu du moyen de course libre que constitue la biellette 25, le raccourcissement nul de la courbe C3 correspondant au raccourcissement de la courbe C2 pour un basculement de 15° de la ridelle 3.

Entre les positions fermée et d'enclenchement (figures 4 et 5), la ridelle 3 n'est soumise à aucun moment résistant puisque le dispositif 10' se déforme sans raccourcissement de l'élément 17 ou de l'élément 17A ; lorsque la position d'enclenchement (figure 5) est atteinte, l'élément 17 exerce une réaction élastique A1 qui est sa valeur de prétarage, celle-ci étant inférieure mais proche de l'effort d'équilibre, la réaction élastique de l'élément 17 croît ensuite linéairement en fonction de sa raideur (qui est égale à la moitié de celle de l'élément 17 du dispositif 10) ; lorsque la ridelle a basculé de 45° (figure 6), la réaction élastique qui s'exerce sur le levier 11 provient à la fois de l'élément 17 et de l'élément 17A, la réaction élastique procurée par l'élément 17A s'additionnant à la réaction A1' procurée alors par l'élément 17 de sorte que la réaction élastique totale atteint une valeur B, l'élément 17A ayant une valeur de tarage égale à la différence B-A1', la valeur B étant légèrement inférieure à l'effort d'équilibre correspondant ; et dans la suite du mouvement d'ouverture de la ridelle jusqu'à la position ouverte (figure 7), la réaction élastique totale croît linéairement avec une pente double de celle qu'a la réaction entre la position d'enclenchement et la position où la ridelle a basculé de 45° (figures 5 et 6), l'élément 17A ayant la même raideur que l'élément 17.

On voit que, comme pour la variante donnant la courbe C2', la totalité du mouvement d'ouverture de la ridelle se déroule spontanément, l'utilisateur n'ayant aucun effort à exercer sur celle-ci pour vaincre un excédent de moment résistant provenant de la réaction du moyen télescopique élastique.

Le fait d'avoir prévu que le moyen télescopique comporte deux éléments télescopiques élastiques qui s'enclenchent successivement (au lieu d'un seul) permet de suivre de plus près l'effort d'équilibre au début de l'ouverture de la ridelle, puisqu'au lieu d'attendre 45° pour exercer un moment résistant, on exerce celui-ci dès 15°.

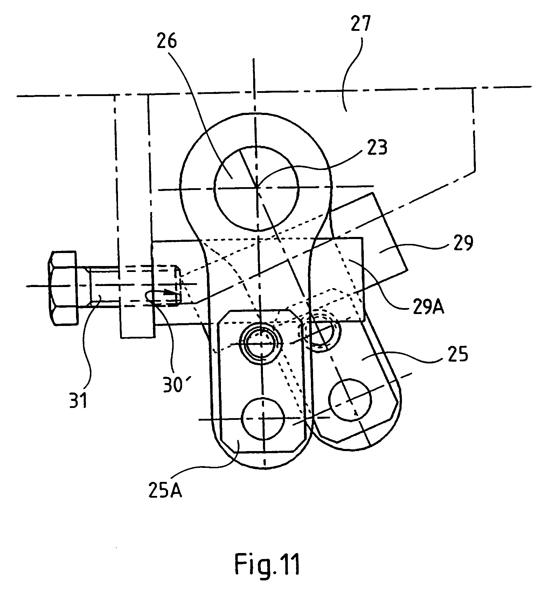

Dans la variante montrée sur la figure 11, la butée 30 qui est formée par le bout d'un téton fixe est remplacée par une butée 30' formée par le bout d'une vis 31, la manoeuvre de cette vis permettant donc de régler l'angle dont a basculé la ridelle à partir de la position fermée lorsqu'elle parvient à la position d'enclenchement où le doigt 29 vient en appui sur la butée 30'.

Avec cette variante, on peut par exemple prévoir, en fonction des circonstances, que la position fermée et la position d'enclenchement soient confondues, ou que lors de l'arrivée à la position d'enclenchement, la valeur de prétarage A1 soit supérieure à l'effort d'équilibre. Dans une variante non représentée, la butée 30A est rendue réglable de la même façon ou d'une façon analogue.

Dans d'autres variantes non représentées, les éléments 17 et 17A sont articulés sur le fond 12 de la benne grâce à un pivot commun, alors qu'ils sont articulés indirectement sur le levier 11 par l'intermédiaire d'un ensemble similaire à celui formé par les pivots 24 et 24A, par les biellettes 25 et 25A, par le pivot 26 et par la console 27 ; les éléments 17 et 17A ont une raideur différente ; un troisième (et même un quatrième ou davantage) élément télescopique élastique à mise en action décalée est également prévu, notamment pour suivre de plus près l'effort d'équilibre vers la fin de l'ouverture de la ridelle où il se remet à croître vis à vis du raccourcissement du moyen télescopique élastique avec un fort taux de croissance.

On notera que dans les variantes du dispositif 10 précédemment décrites, on peut utiliser pour rendre mobile l'axe 19 vis à vis du fond 12, un ensemble correspondant au pivot 24, à la biellette 25, au pivot 26 et à la console 27. Plus généralement, un tel ensemble peut être utilisé pour rendre mobile l'un des axes 18, 16 ou 15 entre les positions fermée et d'enclenchement de la ridelle.

On rappelle que l'invention ne se limite pas aux exemples décrits et représentés.

**Revendications**

1. Dispositif d'assistance à l'ouverture et à la fermeture d'une ridelle (3) de benne de véhicule articulée par le bas,

- comportant :

    . un levier (11) articulé sur le fond (12) de la benne (2) autour d'un premier axe d'articulation (13),
    . une bielle (14) articulée à une première extrémité à la ridelle (3) autour d'un deuxième axe d'articulation (15), et à une deuxième extrémité audit levier (11) autour d'un troisième axe d'articulation (16), et
    . un moyen télescopique élastique (17) disposé dans un espace libre sous le fond de la benne (2), articulé à une première extrémité au levier (11) autour d'un quatrième axe d'articulation (18) et à une deuxième extrémité sur la benne (2) autour d'un cinquième axe d'articulation (19) ;

- lesdits premier à cinquième axes d'articulation (13, 15, 16, 18, 19) étant parallèles à l'axe (7) d'articulation de la ridelle sur la benne ; et
- le dimensionnement dudit levier (11) et de ladite bielle (14), ainsi que le positionnement sur la benne (2) desdits premier et cinquième axes d'articulation (13, 19) étant adaptés, lorsque la ridelle s'ouvre à partir d'une position d'enclenchement jusqu'à une position ouverte, à ce que ledit moyen élastique (17) subisse une variation de longueur entre les quatrième et cinquième axes d'articulation (18, 19) dans le sens du raccourcissement, tandis que croît un effort théorique d'équilibre statique qui, s'il était exercé sur le levier (11) en étant orienté suivant la direction passant par lesdits cinquième et quatrième axes d'articulation, équilibrerait le levier (11) en compensant l'effet exercé sur celui-ci par suite du poids de la ridelle (2).

2. Dispositif selon la revendication 1, caractérisé en ce que lorsque la ridelle (3) passe de la position d'enclenchement à la position ouverte, ledit moyen télescopique élastique exerce sur ledit levier (11) un effort de réaction toujours inférieur audit effort d'équilibre.

3. Dispositif selon l'une quelconque des revendications 1 ou 2, caractérisé en ce que ledit effort d'équilibre croît vis-à-vis du raccourcissement du moyen télescopique élastique avec un taux de croissance qui est élevé lorsque la ridelle (3) vient de quitter la position d'enclenchement, et qui diminue ensuite jusqu'à rester à peu près constant sur au moins une partie du trajet d'ouverture de la ridelle ; et en ce que ledit moyen télescopique élastique est prétaré.

4. Dispositif selon l'une quelconque des revendications 1 à 3, caractérisé en ce qu'il comporte un moyen de course libre pour que le dispositif d'assistance n'exerce aucun effort sur la ridelle (3) au cours de son ouverture entre une position fermée et ladite position d'enclenchement où elle a basculé d'un angle prédéterminé à partir de ladite position fermée.

5. Dispositif selon la revendication 4, caractérisé en ce que ledit moyen de course libre est adapté à rendre librement mobile l'un desdits deuxième, troisième, quatrième ou cinquième axes (15, 16, 18, 19) pendant que la ridelle s'ouvre entre lesdites positions fermée et d'enclenchement.

6. Dispositif selon la revendication 5, caractérisé en ce que ledit moyen de course libre comporte un élément de libre télescopage prévu sur ledit moyen télescopique élastique, sur ladite bielle (14), ou sur ledit levier (11) entre lesdits troisième et quatrième axes d'articulation (16, 18).

7. Dispositif selon la revendication 5, caractérisé en ce que l'un desdits deuxième, troisième, quatrième ou cinquième axes d'articulation (15, 16, 18, 19) est réalisé par un pivot qui articule un premier et un deuxième éléments, qui sont respectivement soit ladite ridelle (3) et ladite bielle (14), soit ladite bielle (14) et ledit levier (11), soit ledit levier (11) et ledit moyen télescopique élastique (17), soit ledit moyen télescopique élastique (17) et ladite benne (2), ledit pivot étant monté à coulissement sur l'un desdits premier et deuxième éléments.

8. Dispositif selon la revendication 7, caractérisé en ce que ledit pivot est monté à coulissement sur l'un desdits premier et deuxième éléments en y étant engagé dans au moins un trou oblong.

9. Dispositif selon la revendication 5, caractérisé en ce que l'un desdits deuxième, troisième, quatrième ou cinquième axes d'articulation (15, 16, 18, 19) est réalisé par un pivot qui articule au-delà de ladite position d'enclenchement, un premier élément par rapport à un deuxième élément qui sont respectivement soit ladite ridelle (3) et ladite bielle (14), soit ladite bielle (14) et ledit levier (11), soit ledit levier (11) et ledit moyen télescopique élastique (17), soit ledit moyen télescopique élastique (17) et ladite benne (2), ledit pivot (24) étant monté sur le premier élément et sur une première extrémité d'une biellette (25), articulée à une deuxième extrémité sur ledit deuxième élément, qui comporte un moyen de butée (30) dont se rapproche ladite biellette (25) au cours de l'ouverture de la ridelle entre la position fermée et la position d'enclenchement, où la biellette (25) vient en appui sur le moyen de butée (30), sur laquelle elle reste en appui dans la suite du mouvement d'ouverture de la ridelle.

10. Dispositif selon la revendication 9, caractérisé en ce que ledit axe d'articulation qui est réalisé par un pivot est le cinquième axe d'articulation (19), ledit premier élément est le moyen télescopique élastique (17) et ledit deuxième élément la benne (2).

11. Dispositif selon l'une quelconque des revendications 4 à 10, caractérisé en ce que le moyen télescopique élastique comporte un premier et un deuxième éléments télescopiques élastiques (17, 17A), le premier élément télescopique élastique (17) étant prétaré avec une première valeur de tarage et le deuxième élément télescopique élastique (17A) avec une deuxième valeur de tarage ; un premier élément de course libre (25) étant prévu pour que le premier élément télescopique élastique (17) n'exerce au cours de l'ouverture de la ridelle aucun effort de réaction sur le levier (11) entre la position fermée de la ridelle et la position d'enclenchement où la ridelle a basculée d'un premier angle prédéterminé à partir de la position fermée, et un deuxième élément de course libre (25A) pour que le deuxième élément télescopique élastique (17A) n'exerce au cours de l'ouverture de la ridelle aucun effort de réaction sur le levier (11) entre la position fermée de la ridelle et une position où la ridelle a basculée d'un deuxième angle prédéterminé qui est plus grand que ledit premier angle prédéterminé, de sorte qu'entre la position fermée de la ridelle et ladite position d'enclenchement, le premier et le deuxième éléments télescopiques élastiques n'exercent aucun effort de réaction sur le levier (11), qu'entre ladite position d'enclenchement et ladite position où la ridelle a basculée dudit deuxième angle prédéterminé, le premier élément télescopique élastique (17) exerce sur le levier (11) un effort de réaction alors que le deuxième élément télescopique élastique (17A) n'exerce aucun effort de réaction, et qu'au-delà de ladite position où la ridelle a basculé dudit deuxième angle prédéterminé, le premier et le deuxième éléments télescopiques élastiques (17, 17A) exercent chacun sur le levier un effort de réaction.

12. Dispositif selon la revendication 11, caractérisé en ce que ledit premier et ledit deuxième éléments télescopiques élastiques (17, 17A) sont articulés à une première extrémité sur un pivot commun (26) réalisant l'un desdits quatrième ou cinquième axes d'articulation du moyen télescopique élastique (18, 19), et à une deuxième extrémité sur un premier et sur un deuxième pivots distincts (24, 24A) coopérant respectivement avec ledit premier et ledit deuxième éléments de course libre (25, 25A), l'autre desdits quatrième et cinquième axes d'articulation du moyen télescopique élastique (18, 19) étant considéré par convention comme étant l'axe du premier pivot (24).

13. Dispositif selon la revendication 12, caractérisé en ce que ledit un des quatrième et cinquième axes d'articulation du moyen télescopique élastique est le quatrième axe (18) et ledit autre des quatrième et cinquième axes d'articulation est le cinquième axe (19).

14. Dispositif selon l'une quelconque des revendications 1 à 13, caractérisé en ce que dans ladite position ouverte de la ridelle, la direction du moyen télescopique élastique rencontre ledit premier axe d'articulation (13).

15. Dispositif selon l'une quelconque des revendications 1 à 14, caractérisé en ce que dans ledit positionnement sur la benne des premier et cinquième axes d'articulation, ledit premier axe d'articulation (13) est situé au niveau de l'axe (7) d'articulation de la ridelle sur la benne (2) et derrière celui-ci, et ledit cinquième axe d'articulation (19) est situé en arrière et en-dessous dudit premier axe d'articulation (13) ; en ce que dans la position d'enclenchement, lesdits deuxième et troisième axes d'articulation (15, 16) sont en avant et respectivement au-dessus et en-dessous de l'axe (7) d'articulation de la ridelle sur la benne, et ledit quatrième axe d'articulation (18) en-dessous et en arrière du troisième axe d'articulation (16), et endessous et en avant du cinquième axe d'articulation (19) ; et en ce que dans la position ouverte de la ridelle, le deuxième axe d'articulation (15) est en-dessous et en arrière de l'axe (7) d'articulation de la ridelle sur la benne et le troisième axe d'articulation (16) en-dessous et en arrière du deuxième axe d'articulation (15).

**Claims**

1. Device for assisting the opening and closing of a side panel (3) of an articulated-vehicle body from below,

   - including:

     . a lever (11) articulated on the bottom (12) of the body (2) about a first articulation axis (13),

     . a link (14) articulated at a first end on the side panel (3) about a second articulation axis (15), and at a second end on the said lever (11) about a third articulation axis (16), and

     . an elastic telescopic means (17) disposed in a free space below the bottom of the body (2), articulated at a first end on the lever (11) about a fourth articulation axis (18) and at a second end on the body (2) about a fifth articulation axis (19);

   - the said first to fifth articulation axes (13, 15, 16, 18, 19) being parallel to the articulation axis (7) of the side panel on the body; and

   - the sizing of the said lever (11) and of the said link (14) and the positioning on the body (2) of the said first and fifth articulation axes (13, 19) being adapted, when the side panel opens from a triggering position as far as an open position, so that the said elastic means (17) undergoes a variation in length between the fourth and fifth articulation axes (18, 19) in the direction of shortening, whilst there is an increase in a theoretical static equilibrium force which, if it were exerted on the lever (11) whilst being oriented in the direction passing through the said fifth and fourth articulation axes, would balance the lever (11) by compensating for the effect exerted on the latter consequent upon the weight of the side panel (2).

2. Device according to Claim 1, characterised in that, when the side panel (3) passes from the triggering position to the open position, the said elastic telescopic means exerts, on the said lever (11), a reaction force which is always less than the said equilibrium force.

3. Device according to either one of Claims 1 or 2, characterised in that the said equilibrium force increases vis-a-vis the shortening of the elastic telescopic means with a rate of increase which is high when the side panel (3) has just left the triggering position and which then decreases until it remains more or less constant over at least part of the path of opening of the side panel; and in that the said elastic telescopic means is pre-calibrated.

4. Device according to any one of Claims 1 to 3, characterised in that it includes a free-travel means so that the assistance device exerts no force on the side panel (3) in the course of its opening between a closed position and the said triggering position in which it has tilted through a predetermined angle from the said closed position.

5. Device according to Claim 4, characterised in that the said free travel means is adapted to make one of the said second, third, fourth or fifth axes (15, 16, 18, 19) freely mobile whilst the side panel is opening between the said closed and triggering positions.

6. Device according to Claim 5, characterised in that the said free travel means includes a free telescoping member provided on the said elastic telescopic means, on the said link (14), or on the said lever (11) between the said third and fourth articulation axes (16, 18).

7. Device according to Claim 5, characterised in that one of the said second, third, fourth or fifth articulation axes (15, 16, 18, 19) is produced by a pivot which articulates first and second elements, which are respectively either the said side panel (3) and the said link (14), or the said link (14) and the said lever (11), or the said lever (11) and the said elastic telescopic means (17), or the said elastic telescopic means (17) and the said body (2), the said pivot being slidably mounted on one of the said first and second elements.

8. Device according to Claim 7, characterised in that the said pivot is slidably mounted on one of the said first and second elements whilst being engaged therein in at least one oblong hole.

9. Device according to Claim 5, characterised in that one of the said second, third, fourth or fifth articulation axes (15, 16, 18, 19) is produced by a pivot which articulates, beyond the said triggering position, a first element with respect to a second element which are respectively either the said side panel (3) and the said link (14), or the said link (14) and the said lever (11), or the said lever (11) and the said elastic telescopic means (17) or the said elastic telescopic means (17) and the said body (2), the said pivot (24) being mounted on the first element and on a first end of a rocker (25), articulated at a second end on the said second element, which has a stop means (30) approached by the said rocker (25) in the course of the opening of the side panel between the closed position and the triggering position, where the rocker (25) comes to bear on the stop means (30), on which it remains in abutment during the remainder of the opening movement of the side panel.

10. Device according to Claim 9, characterised in that the said articulation axis which is produced by a pivot is the fifth articulation axis (19), the said first element is the elastic telescopic means (17) and the said second element the body (2).

11. Device according to any one of Claims 4 to 10, characterised in that the elastic telescopic means includes first and second elastic telescopic elements (17, 17A), the first elastic telescopic element (17) being pre-calibrated with a first calibration value and the second elastic telescopic element (17A) with a second calibration value; a first free-travel element (25) being provided so that the first elastic telescopic element (17) does not, in the course of the opening of the side panel, exert any reaction force on the lever (11) between the closed position of the side panel and the triggering position in which the side panel has tilted through a first predetermined angle from the closed position, and a second free-travel element (25A) so that the second elastic telescopic element (17A) does not, in the course of the opening of the side panel, exert any reaction force on the lever (11) between the closed position of the side panel and a position in which the side panel has tilted through a second predetermined angle which is larger than the said first predetermined angle, so that, between the closed position of the side panel and the said triggering position, the first and second elastic telescopic elements exert no reaction force on the lever (11), so that, between the said triggering position and the said position in which the side panel has tilted through the said second predetermined angle, the first elastic telescopic element (17) exerts a reaction force on the lever (11) whilst the second elastic telescopic element (17A) exerts no reaction force, and so that, beyond the said position in which the side panel has tilted through the said second predetermined angle, the first and second elastic telescopic elements (17, 17A) each exert a reaction force on the lever.

12. Device according to Claim 11, characterised in that the said first and the said second elastic telescopic elements (17, 17A) are articulated at a first end on a common pivot (26) forming one of the said fourth or fifth articulation axes of the elastic telescopic means (18, 19), and at a second end on distinct first and second pivots (24, 24A) cooperating respectively with the said first and the said second free-travel elements (25, 25A), the other one of the said fourth and fifth articulation axes of the elastic telescopic means (18, 19) being considered by convention to be the axis of the first pivot (24).

13. Device according to Claim 12, characterised in that the said one of the fourth and fifth articulation axes of the elastic telescopic means is the fourth axis (18) and the said other one of the fourth and fifth articulation axis is the fifth axis (19).

14. Device according to any one of Claims 1 to 13, characterised in that, in the said open position of the side panel, the direction of the elastic telescopic means encounters the said first articulation axis (13).

15. Device according to any one of Claims 1 to 14, characterised in that, in the said positioning on the body of the first and fifth articulation axes, the said first articulation axis (13) is situated at the level of the articulation axis (7) of the side panel on the body (2) and behind the said axis, and the said fifth articulation axis (19) is situated behind and below the said first articulation axis (13); in that, in the triggering position, the said second and third articulation axes (15, 16) are in front and respectively above and below the articulation axis (7) of the side panel on the body, and the said fourth articulation axis (18) below and behind the third articulation axis (16), and below and in front of the fifth articulation axis (19); and in that, in the open position of the side panel, the second articulation axis (15) is below and behind the articulation axis (7) of the side panel on the body and the third articulation axis (16) below and behind the second articulation axis (15).

**Patentansprüche**

1. Hilfsvorrichtung zum Öffnen und Schließen einer unten gelenkig gelagerten Bordwand der Ladepritsche eines Fahrzeugs mit

- einem am Boden (12) der Ladepritsche (2) um eine erste Gelenkachse (13) verschwenkbar gelagerten Hebel (11),
- einem Stößel (14), der an einem ersten Ende, um eine zweite Gelenkachse (15) verschwenkbar, gelenkig mit der Bordwand (3) und an einem zweiten Ende, um eine dritte Gelenkachse (16) verschwenkbar, gelenkig mit dem Hebel (11) verbunden ist, und

- einem teleskopischen, elastischen Element (17), das in einem freien Raum unter dem Boden der Ladepritsche (2) angeordnet ist und an einem ersten Ende, um eine vierte Gelenkachse (18) verschwenkbar, gelenkig mit dem Hebel (11) und an einem zweiten Ende, um eine fünfte Gelenkachse (19) verschwenkbar, gelenkig mit der Ladepritsche (2) verbunden ist,

- wobei die erste bis fünfte Gelenkachse (13, 15, 16, 18, 19) zur Gelenkachse (7) zwischen der Bordwand und der Ladepritsche parallel sind und

- die Auslegung des Hebels (11) und des Stößels (14) sowie die Lage der ersten und fünften Gelenkachse (13, 19) an der Ladepritsche (2) so gewählt sind, daß dann, wenn sich die Bordwand, ausgehend von einer Einschaltstellung, bis zu einer geöffneten Stellung öffnet, das elastische Element (17) eine Längenänderung zwischen der vierten und der fünften Gelenkachse (18, 19) im Sinne einer Verkürzung erfährt, während eine theoretische, statische Gleichgewichtskraft ansteigt, die, ausgeübt auf den Hebel (11) und in Richtung der Verbindung zwischen der fünften und vierten Gelenkachse wirkend, den Hebel (11) durch Ausgleich des auf ihn wirkenden Gewichts der Bordwand (3) im Gleichgewicht hielte.

2. Vorrichtung nach Anspruch 1, **dadurch gekennzeichnet**, daß dann, wenn sich die Bordwand (3) von der Einschaltstellung zur geöffneten Stellung bewegt, das teleskopische, elastische Element auf den Hebel (11) eine Reaktionskraft ausübt, die immer unterhalb der Gleichgewichtskraft liegt.

3. Vorrichtung nach einem der Ansprüche 1 oder 2, **dadurch gekennzeichnet**, daß die Gleichgewichtskraft mit der Verkürzung des teleskopischen, elastischen Elements mit einem Steigungsverhältnis ansteigt, welches einen hohen Wert hat, wenn die Bordwand (3) gerade die Einschaltstellung verlassen hat, und das sich anschließend bis auf einen angenähert konstanten Wert verringert, der wenigstens auf einem Teil der Bewegungsbahn der Bordwand beim Öffnen beibehalten wird, und daß das teleskopische, elastische Element vorbelastet ist.

4. Vorrichtung nach einem der Ansprüche 1 bis 3, **dadurch gekennzeichnet**, daß sie Mittel mit einer Lose aufweist, damit sie keine Kraft auf die Bordwand (3) bei deren Bewegung zwischen einer geschlossenen Stellung und der Einschaltstellung, in der sie, ausgehend von der geschlossenen Stellung, um einen bestimmten Winkel verschwenkt ist, ausübt.

5. Vorrichtung nach Anspruch 4, **dadurch gekennzeichnet**, daß die Mittel mit der Lose so ausgelegt sind, daß die zweite, dritte, vierte oder fünfte Gelenkachse (15, 16, 18, 19) frei beweglich ist, während sich die Bordwand von der geschlossenen zur Einschaltstellung öffnet.

6. Vorrichtung nach Anspruch 5, **dadurch gekennzeichnet**, daß die Mittel mit der Lose ein frei teleskopierbares Glied an dem teleskopischen, elastischen Element, dem Stößel (14) oder dem Hebel (11) zwischen der dritten und vierten Gelenkachse (16, 18) aufweisen.

7. Vorrichtung nach Anspruch 5, **dadurch gekennzeichnet**, daß die zweite, dritte, vierte oder fünfte Gelenkachse (15, 16, 18, 19) durch einen Gelenkzapfen gebildet ist, der ein erstes und ein zweites Teil miteinander gelenkig verbindet, bei denen es sich entweder um die Bordwand (3) und den Stößel (14), oder den Stößel (14) und den Hebel (11), oder diesen Hebel (11) und das teleskopische, elastische Element (17), oder dieses teleskopische, elastische Element (17) und die Ladepritsche (2) handelt, wobei der Gelenkzapfen verschieblich am ersten oder zweiten Teil angebracht ist.

8. Vorrichtung nach Anspruch 7, **dadurch gekennzeichnet**, daß der Gelenkzapfen verschieblich am ersten oder zweiten Teil angebracht ist, indem er in wenigstens ein Langloch eingreift.

9. Vorrichtung nach Anspruch 5, **dadurch gekennzeichnet**, daß die zweite, dritte, vierte oder fünfte Gelenkachse (15, 16, 18, 19) durch einen Gelenkzapfen gebildet ist, der jenseits der Einschaltstellung ein erstes Teil mit einem zweiten Teil gelenkig verbindet, bei denen es sich entweder um die Bordwand (3) und den Stößel (14), oder diesen Stößel (14) und den Hebel (11), oder diesen Hebel (11) und das teleskopische, elastische Element (17), oder dieses teleskopische, elastische Element (17) und die Ladepritsche (2) handelt, wobei der Gelenkzapfen (24) mit dem ersten Teil und dem ersten Ende einer Lasche (25) verbunden ist, deren zweites Ende an dem zweiten Teil angelenkt ist, das ein Anschlagglied (30) aufweist, dem sich die Lasche (25) beim Öffnen der Bordwand zwischen der geschlossenen Stellung und der Einschaltstellung nähert, in der die Lasche (25) zur Anlage an dem Anschlagglied (30) kommt, an dem sie während der weiteren Öffnungsbewegung der Bordwand in Anlage bleibt.

10. Vorrichtung nach Anspruch 9, **dadurch gekennzeichnet**, daß die Gelenkachse, die durch einen Gelenkzapfen gebildet ist, die fünfte Gelenkachse (19) ist, und daß das erste Teil das teleskopische, elastische Element (17) und das zweite Teil die Ladepritsche (2) ist.

11. Vorrichtung nach einem der Ansprüche 4 bis 10, **dadurch gekennzeichnet**, daß das teleskopische, elastische Element ein erstes und ein zweites teleskopisches, elastisches Element (17, 17A) aufweist, das erste teleskopische, elastische Element (17) mit einem ersten Vorbelastungswert und das zweite teleskopische, elastische Element (17A) mit einem zweiten Vorbelastungswert vorbelastet sind, ein erstes Teil (25) mit einer Lose vorgesehen ist, damit das erste teleskopische, elastische Element (17) bei dem Öffnen der Bordwand zwischen der geschlossenen Stellung und der Einschaltstellung der Bordwand, in der die Bordwand, ausgehend von der geschlossenen Stellung, um einen bestimmten ersten Winkel verschwenkt ist, keine Reaktionskraft auf den Hebel (11) ausübt, und ein zweites Teil (25A) mit einer lose vorgesehen ist, damit das zweite teleskopische, elastische Element (17A) beim Öffnen der Bordwand zwischen der geschlossenen Stellung und einer Stellung, in der die Bordwand um einen zweiten bestimmten Winkel, der größer ist als der erste bestimmte Winkel, verschwenkt ist, keine Reak-tionskraft auf den Hebel (11) ausübt, so daß zwischen der geschlossenen Stellung der Bordwand und der Ein-schaltstellung das erste und das zweite teleskopische, elastische Element keine Reaktionskraft auf den Hebel (11) ausüben, zwischen der Einschaltstellung und der Stellung, in der die Bordwand um den bestimmten zweiten Winkel verschwenkt worden ist, das erste teleskopische, elastische Element (17) auf den Hebel (11) eine Reak-tionskraft ausübt, während das zweite teleskopische, elastische Element (17A) keine Reaktionskraft ausübt, und jenseits der Stellung, in der die Bordwand um den bestimmten zweiten Winkel verschwenkt ist, das erste und das zweite teleskopische, elastische Element (17, 17A) jeweils eine Reaktionskraft auf den Hebel ausüben.

12. Vorrichtung nach Anspruch 11, **dadurch gekennzeichnet**, daß das erste und das zweite teleskopische, elastische Element (17, 17A) an ihrem ersten Ende gelenkig mit einem gemeinsamen Gelenkzapfen (26) verbunden sind, der die vierte oder fünfte Gelenkachse des teleskopischen, elastischen Elements (18, 19) bildet, und an ihrem zweiten Ende mit einem ersten und einem zweiten Gelenkzapfen (24, 24A) verbunden sind, die voneinander getrennt sind und mit dem ersten bzw. dem zweiten Teil (25, 25A) mit jeweils einer Lose zusammenwirken, wobei die jeweils andere Gelenkachse der vierten bzw. fünften Gelenkachse (18, 19) des teleskopischen, elastischen Elements definitionsgemäß als Achse des ersten Gelenkzapfens (24) angesehen wird.

13. Vorrichtung nach Anspruch 12, **dadurch gekennzeichnet**, daß eine der vierten oder fünften Gelenkachsen des teleskopischen, elastischen Elements die vierte Achse (18) und die andere der vierten und fünften Gelenkachsen die fünfte Achse (19) ist.

14. Vorrichtung nach einem der Ansprüche 1 bis 13, **dadurch gekennzeichnet**, daß in der geöffneten Stellung der Bordwand das teleskopische, elastische Element auf die erste Gelenkachse (13) gerichtet ist.

15. Vorrichtung nach einem der Ansprüche 1 bis 14, **dadurch gekennzeichnet**, daß bei der genannten Lage der ersten und fünften Gelenkachse an der Ladepritsche die erste Gelenkachse (13) auf dem Niveau der Achse (7) der Anlenkung der Bordwand an der Ladepritsche (2) hinter dieser liegt und die fünfte Gelenkachse (19) hinter und unter der ersten Gelenkachse (13) liegt, und daß in der Einschaltstellung die zweite und die dritte Gelenkachse (15, 16) vor und über bzw. unter der Achse (7) des Gelenks zwischen der Bordwand und der Ladepritsche liegen, und die vierte Gelenkachse (18) unter und hinter der dritten Gelenkachse (16) und unter und vor der fünften Gelenkachse (19) liegt, und daß in der geöffneten Stellung der Bordwand die zweite Gelenkachse (15) unter und hinter der Gelenkachse (7) der Bordwand an der Ladepritsche liegt und sich die dritte Gelenkachse (16) unter und hinter der zweiten Gelenkachse (15) befindet.

Fig.1

EP 0 592 322 B1

Fig.2

Fig.3

Fig.4

Fig.5

EP 0 592 322 B1

Fig.6

EP 0 592 322 B1

Fig.7

Fig. 8

Fig. 9

Fig.10

Fig.11